# EUROPEAN PATENT APPLICATION

(11) **EP 2 505 109 A1**
(43) Date of publication of application: **03.10.2012**
(21) Application number: 11382086.4
(22) Date of filing: 30.03.2011
(51) Int. Cl.: A47J 31/36

(54) **Coffee maker with trolley**

(71) Applicant: Celaya, Emparanza y Galdos Internacional, S.A., 01013 Vitoria Alava (ES)
(72) Inventor: Zabala, Javier, 01013, Vitoria (Alava) (ES)
(74) Representative: ZBM Patents

(57) **Abstract**

Coffee maker comprising an overture, a trolley (30) which is movable into and out of the body of the coffee maker through said overture, the trolley comprising a seat (32) which is movable in its normal direction and can receive a pre-packed coffee portion (50), and at least one track (40) extending from said overture and having a portion proximal to the overture and a portion distal from the overture, the distal portion being at a substantially lower height than the proximal portion. The trolley comprises at least one rocker arm (36) that is linked to the seat, is arranged to slide on the track and is blocked for rotation in the sense of the friction torque caused on the rocker arm by sliding across the track when the trolley is moving out of the body of the coffee maker, whereby the rocker arm rigidly follows the track in this movement.

## Description

The invention relates to a coffee maker comprising an overture and a trolley which is movable into and out of the body of the coffee maker through said overture. The trolley comprises a seat which is movable in its normal direction and can receive a pre-packed coffee portion. If the seat is flat its normal direction is the perpendicular to the plane of the seat, and if the seat is concave its normal direction is the line of symmetry of the concavity, although, in practice, the direction normal to the seat is almost always the vertical direction, because the seat normally extends mainly in or slightly above a horizontal plane; the trolley normally moves horizontally and the piston normally moves vertically.

### BACKGROUND ART

There are known coffee makers which comprise a brewing chamber, defined jointly by a piston and a coffee holder that are joined when the piston is driven to press a pre-packed coffee portion housed in the holder, and a trolley that can move into and out of the body of the coffee maker and includes said coffee holder. When the trolley is in, the coffee holder and the piston can define the brewing chamber, and when the trolley is out, a new coffee portion can be placed in the coffee holder.

For example, patent application W00049926 describes a machine to produce espresso coffee which comprises a containing structure defining a brewing chamber the upper part of which is made on a piston movable from a first raised position to a second lowered position, and the lower part of which is made on a movable trolley. The machine further comprises expulsion means able to automatically remove the coffee portion, or wafer, after the coffee has been delivered, during the withdrawal movement of trolley lower part from the body of the machine. Said expulsion means comprises a rotary bar on which two washer elements are mounted free to rotate with respect to the rotary bar and each supporting a rear fin. The two washer elements support a lower fin which extends transversely for a substantial part of the width of the infusion chamber. The washer elements, and hence the fins, are elastically constrained to the rotary bar by means of spring means, so that under normal conditions, i.e. in stress-free conditions, the rear fin is maintained in abutment on a transverse end-of-travel rod supported by two vertical shoulders provided on the trolley. On each of these shoulders there is a roller intended to improve the sliding of the trolley on its guide. In an intermediate position between the washer elements and the vertical shoulders there are two cams keyed onto the rotary bar, each able to co-operate with a longitudinal profile. The two cams support a transverse plate arranged at the front of the lower fin in a position substantially adjacent thereto.

In a coffee-making cycle, said trolley is first taken to its outer position to allow a wafer to be easily deposited in correspondence with the lower part; inside the lower part the wafer is held partly raised due to the thrust exerted by elastic lifting means on a filter arranged at the bottom of the lower part. The trolley is then moved to its inner position, taking the longitudinal profiles into correspondence with the cams which, sliding above the profiles, cause the rotary bar to rotate clockwise. Consequently, the transverse plate exerts a thrust on the lower fin which causes the washer element to rotate in a clockwise direction too, allowing the wafer to pass. At the same time, the wafer, as it advances, comes into contact with the transverse plate, further thrusting it and simultaneously receiving therefrom a downwards thrust which causes it to settle and to centre better inside the lower part. Once the trolley has assumed its inner position, the washer element assumes again its normal position due to the effect of its own elastic means, while the wafer is positioned below the piston and again raised. The coffee brewing can then be started by taking the piston to its lowered position compressing the wafer inside the brewing chamber.

At the end of the brewing the piston returns to its raised position and, should more coffee have to be prepared, the trolley is returned to its outer position. While the trolley is moving, the longitudinal profiles return in correspondence with the cams which, sliding on the profiles, cause the rotary bar to rotate in an anti-clockwise direction. The wafer, having returned to its raised position after the brewing chamber has opened, is instead retained by the lower fin, which, although thrust by the wafer itself, is unable to rotate because of the abutment of the rear fin on the end-of-travel rod. When the trolley reaches its outer position, the wafer, unable to follow the movement of the latter, falls into a discharge aperture and rests on the trolley's guide beneath. The lower part is thus free and a new wafer can be placed thereon for more coffee to be prepared. The trolley can then be returned to the inner position and, in its advance, can push the used wafer out of the guide and make it fall inside a collection container underneath.

It can be appreciated that this expulsion arrangement is intricate and cumbersome and, among other things, complicates the expulsion means as they also perform the function of centring the coffee wafer.

### SUMMARY OF THE INVENTION

It is an object of the present invention to provide a coffee maker with a simplified expulsion arrangement.

According to an aspect of the invention, the coffee maker comprises at least one track extending from said overture and having a portion proximal to the overture and a portion distal from the overture, the distal portion being at a substantially lower height than the proximal portion, and the trolley comprises at least one rocker arm that is linked to the seat, is arranged to slide on the track and is blocked for rotation in the sense of the friction torque caused on the rocker arm by sliding across the track when the trolley is moving out of the body of the coffee maker, whereby the rocker arm rigidly follows the track in this movement.

Hence, when the trolley is outwardly moving after a coffee has been brewed, the rocker arm follows the generally ascending track and is consequently raised, in turn raising the seat until the used coffee portion is on or above the upper surface of the trolley, so that, upon a further outward displacement of the trolley, the used coffee portion can be left behind and be directed to a disposal container. It is readily appreciated that this arrangement is considerably simpler than the ones known in the art.

In an embodiment, the track comprises a middle portion located between the proximal and distal portions, the middle portion being steeper than the proximal and distal portions. Since the proximal portion is not steep, the used coffee portion is hardly raised after a certain point in the movement of the trolley.

The trolley preferably comprises a housing able to completely receive the pre-packed coffee portion (e.g., capsules, paper doses, etc), the seat being contained inside said housing. Thus, the coffee portion is self-centred in the relatively deep housing, from which the coffee portion does not protrude.

In an embodiment, the coffee maker further comprises a stationary stopper that intercepts the used coffee portion as the trolley proceeds with its outward displacement, being discharged by gravity after losing the support of the outwardly moving trolley. The stationary stopper can be a wall located above the overture and outside the trolley, for instance an outer wall of the coffee maker.

In an embodiment, the rocker arm is located below the seat.

Preferably, the rocker arm is not blocked for rotation in the sense of the friction torque caused on the rocker arm by sliding across the track when the trolley is moving into the body of the coffee maker, so that the rocker arm cedes and does not operatively engage the track in this movement.

In an embodiment, the trolley comprises elastic means downwardly pushing the seat, thus downwardly leaning on the coffee portion. Said elastic means can be located below the seat and above the rocker arm.

The coffee maker preferably comprises two tracks for guiding the trolley and two corresponding rocker arms, enhancing the reliability of the mechanism.

In an embodiment, the two tracks are parallel, which is the simpler arrangement.

In an embodiment, the two tracks are separated in a direction transversal to the direction of the movement of the trolley.

The used coffee portion is preferably discharged by gravity and falls through the gap between the two tracks.

In an embodiment, the trolley is manually actuated.

### BRIEF DESCRIPTION OF THE DRAWINGS

A particular embodiment of the present invention will be described in the following, only by way of non-limiting example, with reference to the appended drawings, in which all the figures are vertical cross-sections of the coffee maker and all except the first one are viewed from the side of the coffee maker. More particularly:
figure 1 is viewed from the front of the coffee maker and shows the coffee portion in place and ready for a brewing;
figure 2 shows the same disposition of figure 1;
figure 3 shows the situation after the brewing, whit the lever raised;
figure 4 shows the outward movement of the trolley;
figure 5 shows further outward movement of the trolley;
figure 6 shows the used coffee portion being disposed of;
figure 7 shows the inward movement of the trolley conveying a fresh coffee portion; and
figure 8 shows an enlarged portion of figure 4;
figure 9 shows an enlarged portion of figure 7; and
figure 10 shows a detail of figure 8.

### DESCRIPTION OF PARTICULAR EMBODIMENTS

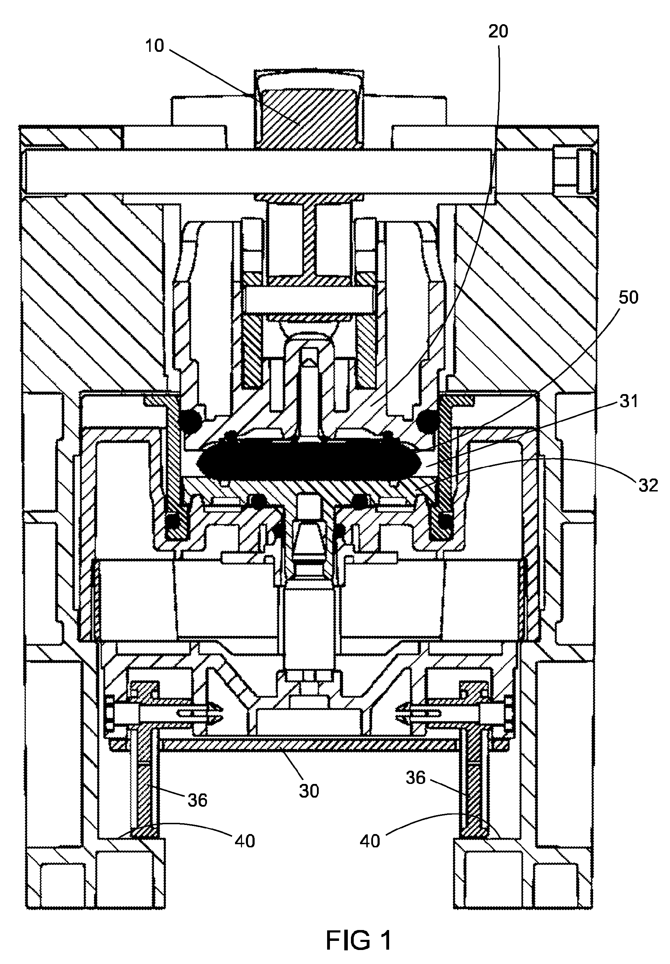

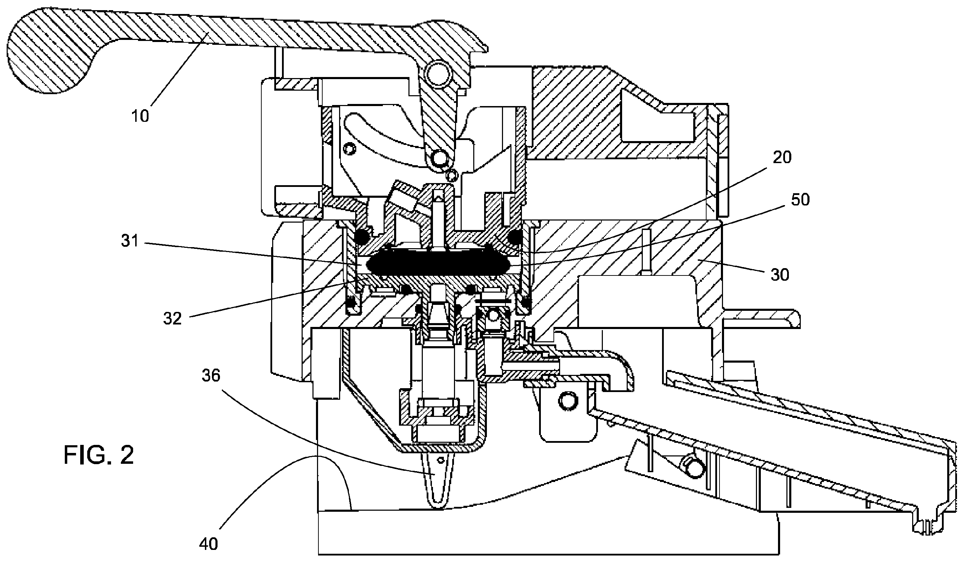

In an embodiment of the invention, the coffee maker comprises a lever 10 which vertically actuates a piston 20, a trolley 30 which can be pushed into and pulled out of the coffee maker, and two parallel tracks 40 in the lower portion of the coffee maker (see figs. 1 and 2). The trolley 30 comprises a housing 31 for a coffee portion 50, a seat 32 for the coffee portion 50 that can follow a vertical movement inside the housing 31 and two rocker arms 36 that engage the tracks 40, one arm on each track; the rocker arms 36 are linked to the seat 32 and are free to rotate in one sense but not in the other. The tracks 40 have a flat inner portion, an ascending middle portion and an outer flat portion; 'ascending' means getting higher when moving out of the coffee maker, and the inner or outer portion of the tracks may also be slightly ascending. Both the lever 10 and the trolley 30 are hand driven.

The brewing disposition is defined by moving the trolley 30, carrying the coffee portion 50, to its innermost position and the lever 10, and consequently the piston 20, to its lowermost position. Moving the trolley 30 to its innermost position sets the housing 31, with the coffee portion 50, ready to form the brewing chamber with the piston 20, and said chamber is then actually formed just after the piston 20 is moved to its lowermost position by lowering the lever 10, during which movement the piston 20 enters the housing 31 and compresses the coffee portion 50.

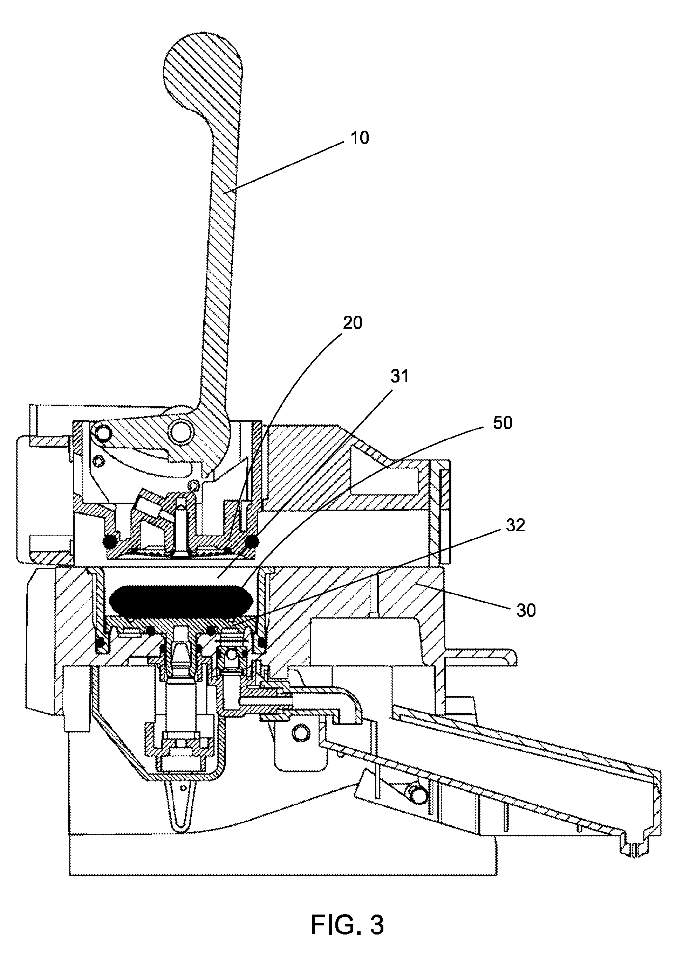

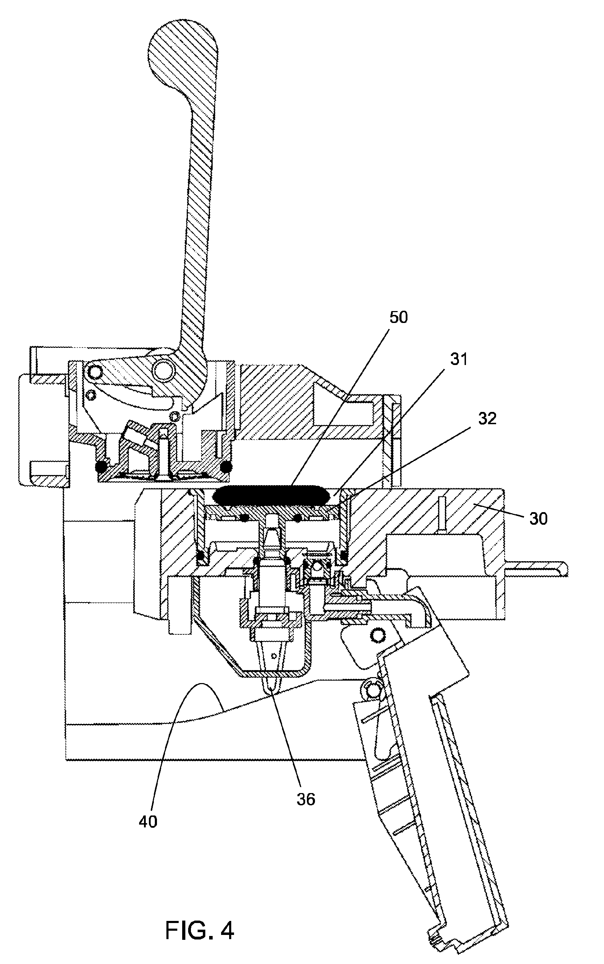

After the coffee has been brewed (fig. 3), and in order to brew another coffee portion, the lever 10 is raised with the effect of upwardly pulling the piston 20, which is then set apart from the housing 31 and loses contact with the used coffee portion 50. At this moment the trolley 30 can be outwardly pulled (fig. 4) thereby conveying the used coffee portion 50 on the seat 32. During the movement of the trolley 30 the rocker arms 36, which in the brewing position were set on the inner portion of the tracks 40, follow the tracks 40 because they cannot rotate in the sense of the frictional inward thrust exerted by the tracks thereon when the trolley is being outwardly pulled, with the effect that, when following the ascending middle portion of the tracks, the rocker arms are raised and push the seat 32 which is then also raised.

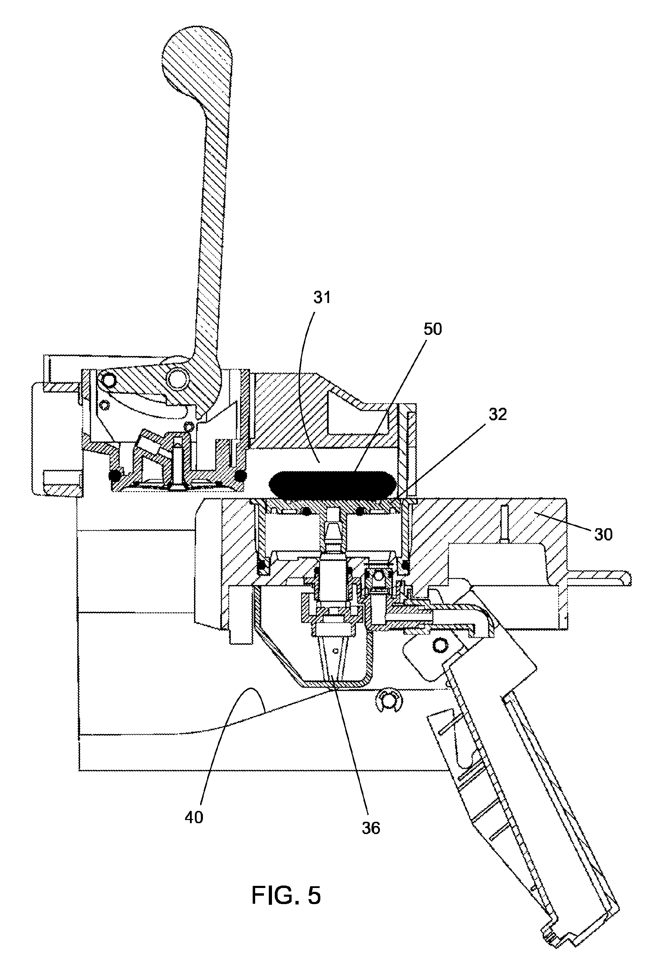

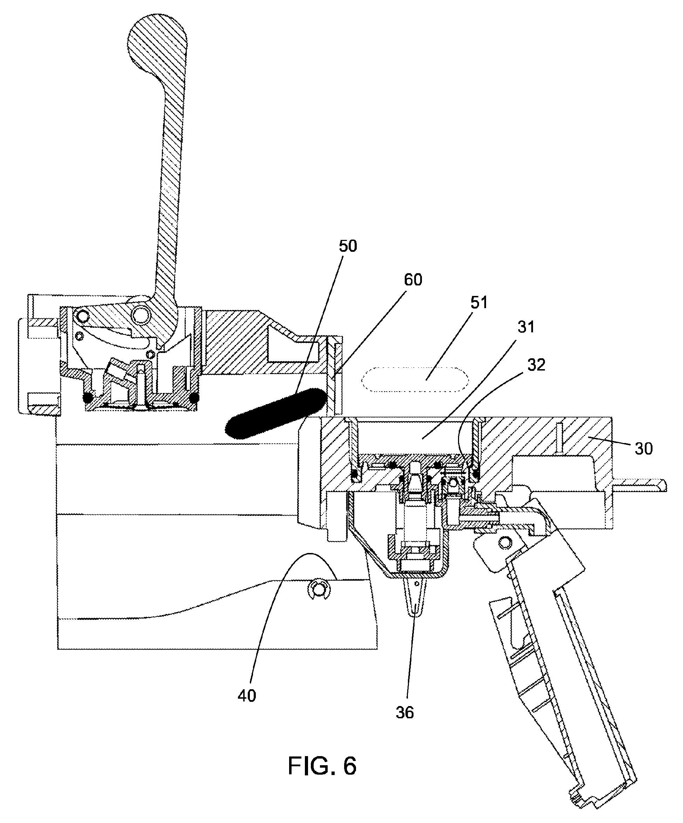

When the rocker arms 36 reach the outer portion of the tracks 40, the seat 32 reaches its uppermost position in which it leaves the used coffee portion 50 at the level of or slightly above the upper surface of the trolley 30 (fig. 5). The continuing outward movement of the trolley 30 causes the used coffee portion 50 to abut against a wall or stopper 60 (fig. 6), whereby the used portion is left behind by the moving trolley, eventually losing the support of the upper surface of the trolley and falling down through the two tracks 40 to a disposal container (nor shown). At its outermost position, the trolley 51 is ready to receive a fresh coffee portion 51.

As already explained, the rocker arms 36 follow the tracks 40 during the movement of the trolley 30 but the latter, in its continued outward movement, eventually conveys the rocker arms 36 out of the body of the coffee maker, beyond the tracks 40. The trolley 30 may comprise elastic means (not shown) that downwardly pushes the seat 32 in the housing 31, or the seat 32 may be downwardly pushed by the user. When the rocker arms 36 are following the tracks 40, said elastic means cannot lower the seat 32 because the latter moves integrally with the rocker arms, with the effect that the elastic means are compressed. But when the rocker arms 36 leave the tracks 40 there is no force opposing the downward push of the elastic means and both the seat 32 and the rocker arms 36 are pushed to their lowermost positions by the elastic means. With this disposition the fresh coffee portion 51 can be completely housed inside the housing 31, i.e., without protruding from the upper surface of the trolley 30.

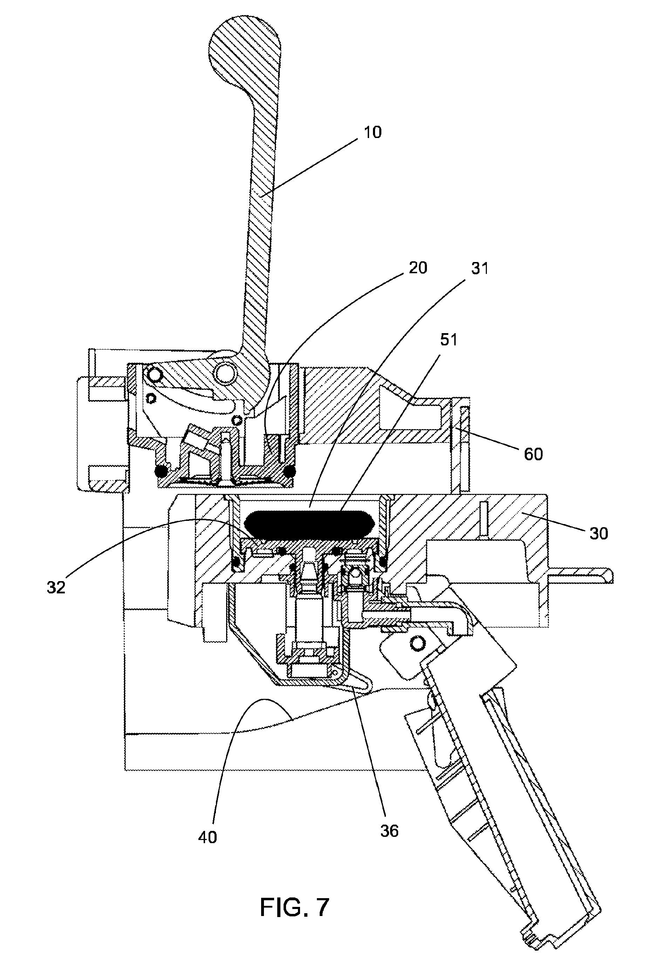

The trolley 30 can then be pushed inside the coffee maker (fig. 7). With the inward movement of the trolley the rocker arms 36 eventually contact again the tracks 40, but now the rocker arms don't follow the tracks, not in the sense a follower follows a cam, because they are free to rotate in the sense of the frictional thrust exerted by the tracks thereon when the trolley is being inwardly moved. Since the rocker arms 36 don't operatively engage the tracks 40, there is no force opposing the downward push applied by the elastic means on the seat 32 and the latter, and consequently the fresh coffee portion 51, inwardly move in a monotonous horizontal direction, the coffee portion 51 being kept inside the housing 31 and not interfering with the stopper 60.

At the end of the inward movement of the trolley 30, and after the lever 10 has been lowered, the situation is the same as in figure 2 and the coffee maker is ready to brew another coffee.

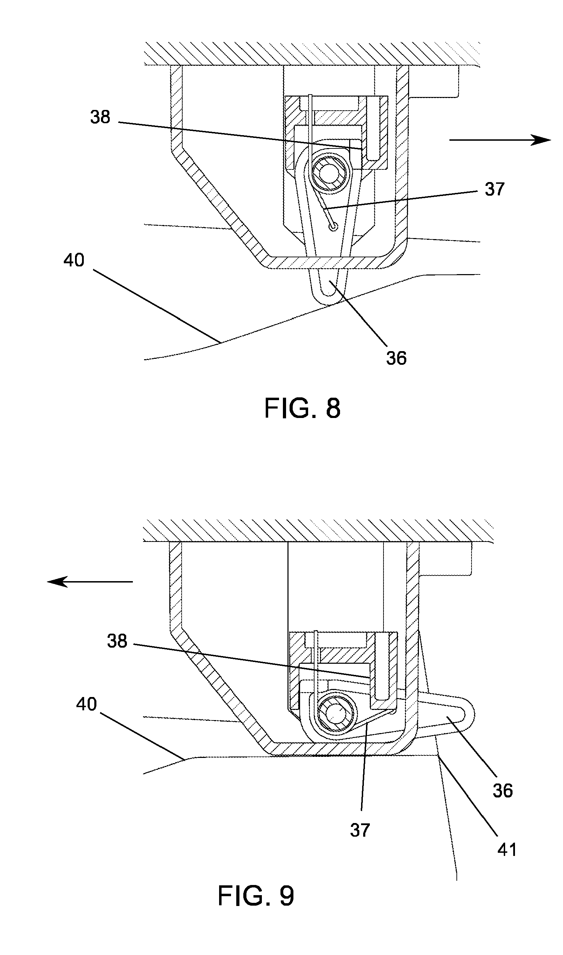

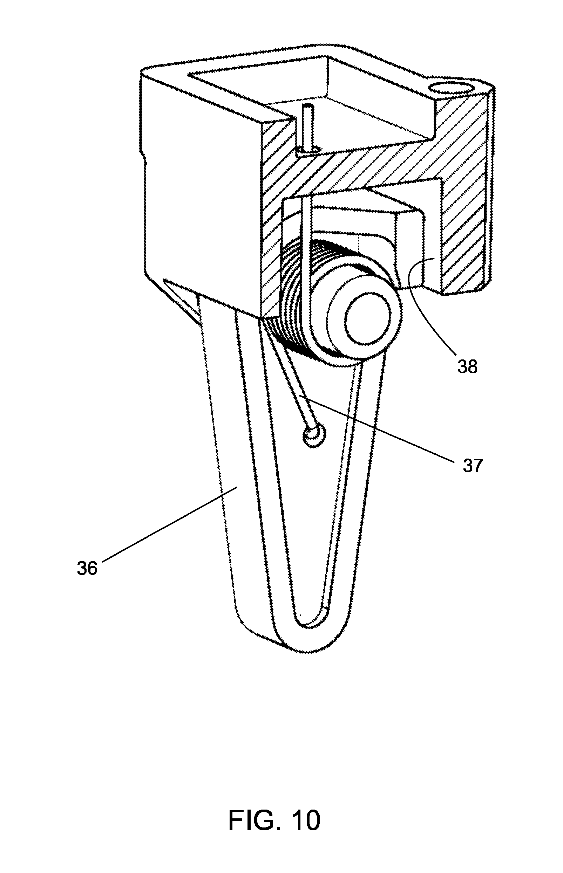

Figures 8, 9 and 10 shows a detailed embodiment of one rocker arm 36. Figure 8 shows the rocker arm moving out of the coffee maker and figure 9 shows the rocker arm moving into the coffee maker. A torsion spring 37 biases the rocker arm 36 in the clockwise sense (as seen in figures 8 and 9). An abutment 38 prevents the rocker arm 36 from rotating clockwise beyond its vertical position; this is why the rocker arm 36 follows the track 40 in the outward movement of the trolley (fig. 8). But in the inward movement of the trolley (fig. 9) the rocker arm 36 is in a lowered position (as already explained) and a middle section of the rocker arm meets the track 40 at an end 41 thereof, whereby the track 40 biases the rocker arm 36 in the counter-clockwise sense. The torsion spring 37 opposes the counter-clockwise rotation of the rocker arm 36 but doesn't prevent it; this is why the rocker arm 36 doesn't follow the track 40 in the inward movement of the trolley. However, as the inward movement of the trolley progresses and the track 40 descends (in the sense of the inward movement), leaving more space to the rocker arm, the torsion spring 37 brings the rocker arm 36 to its substantially vertical position, in which the abutment 38 stops the rocker arm from further clockwise rotation.

Although only particular embodiments of the invention have been shown and described in the present specification, the skilled man will be able to introduce modifications and substitute any technical features thereof with others that are technically equivalent, depending on the particular requirements of each case, without departing from the scope of protection defined by the appended claims.

## Claims

1. Coffee maker comprising an overture and a trolley (30) which is movable into and out of the body of the coffee maker through said overture, the trolley comprising a seat (32) which is movable in its normal direction and can receive a pre-packed coffee portion (50; 51), **characterized in that** it also comprises at least one track (40) extending from said overture and having a portion proximal to the overture and a portion distal from the overture, the distal portion being at a substantially lower height than the proximal portion, and **in that** the trolley comprises at least one rocker arm (36) that is linked to the seat, is arranged to slide on the track and is blocked for rotation in the sense of the friction torque caused on the rocker arm by sliding across the track when the trolley is moving out of the body of the coffee maker.

2. Coffee maker according to claim 1, wherein the track (40) comprises a middle portion located between the proximal and distal portions, the middle portion being steeper than the proximal and distal portions.

3. Coffee maker according to claim 1 or 2, wherein the trolley (30) comprises a housing (31) able to completely receive the pre-packed coffee portion (50; 51), the seat (32) being contained inside said housing.

4. Coffee maker according to any of the preceding claims, further comprising a stationary stopper (60) that intercepts the used coffee portion (50) as the trolley (30) proceeds with its outward displacement.

5. Coffee maker according to claim 4, wherein the stationary stopper (60) is located above the overture and outside the trolley (30).

6. Coffee maker according to claim 5, wherein the stationary stopper (60) is an outer wall of the coffee maker.

7. Coffee maker according to any of the preceding claims, wherein the rocker arm 36) is located below the seat (32).

8. Coffee maker according to any of the preceding claims, wherein the rocker arm (36) is not blocked for rotation in the sense of the friction torque caused on the rocker arm by sliding across the track (40) when the trolley (36) is moving into the body of the coffee maker.

9. Coffee maker according to any of the preceding claims, wherein the trolley comprises elastic means downwardly pushing the seat (32).

10. Coffee maker according to claim 9, wherein said elastic means is located below the seat (32) and above the rocker arm (36).

11. Coffee maker according to any of the preceding claims, comprising two tracks (40) for guiding the trolley (30) and two corresponding rocker arms (36).

12. Coffee maker according to claim 11, wherein the two tracks (40) are parallel.

13. Coffee maker according to claim 11 or 12, wherein the two tracks (40) are separated in a direction transversal to the direction of the movement of the trolley (30).

14. Coffee maker according to claim 13, wherein the used coffee portion (50) is discharged by gravity and falls through the gap between the two tracks (40).

15. Coffee maker according to any of the preceding claims, wherein the trolley (30) is manually actuated.
